# EUROPEAN PATENT APPLICATION

(11) **EP 4 075 748 A1**
(43) Date of publication of application: **19.10.2022**
(21) Application number: 21745088.1
(22) Date of filing: 21.01.2021
(51) Int. Cl.: H04L 29/06, H04L 29/08, G06F 16/9536, G06Q 50/00

(54) **SOCIAL RELATIONSHIP ESTABLISHMENT METHOD AND APPARATUS**

(30) Priority: 22.01.2020 CN 202010075824
(71) Applicant: Beijing Dajia Internet Information Technology Co., Ltd., Beijing 100085 (CN)
(72) Inventor: LI, Ji, Beijing 100085 (CN)
(74) Representative: Attfield, Andrew John
(86) International application number: PCT/CN2021/073157
(87) International publication number: WO 2021/147970

(57) **Abstract**

The present disclosure relates to a social relationship establishment method and apparatus, and a terminal, a server and a storage medium. The method comprises: in response to a request for establishing a social relationship with a target account by a first account, obtaining an interactive verification condition set by the target account for the first account, and a social interaction permission corresponding to the interactive verification condition; obtaining the social interaction state of the first account with the target account within the social interaction permission; and when the social interaction state satisfies the interaction verification condition, establishing the social relationship between the target account and the first account. When a user accepts another user's request to establish a social relationship, whether the social relationship is actually established can be determined according to whether the social interaction state between each other satisfies a corresponding interaction verification condition.

## Description

### CROSS-REFERENCE TO RELATED APPLICATIONS

The present disclosure claims priority to Chinese Patent Application No. 202010075824.0 filed on January 22, 2020, the content of which is incorporated herein by reference in its entirety.

### TECHNICAL FIELD

The present disclosure relates to the technical field of Internet communication, and in particular, to a method and apparatus for establishing a social relationship, a terminal, a server and a storage medium.

### BACKGROUND

With the rise of the mobile Internet, many platforms with social attributes have gradually emerged, which may facilitate daily communication between friends and play a very important role in communication. However, generally, the communication needs to be performed after friending that is, establishing a social relationship.

Moreover, in the related art, in response to adding a friend in a platform with social attributes, a general process is as follows: a stranger actively searches for a target account through a user identifier such as a mobile phone number, a user name, a user ID, etc., or the system actively pushes the target account as a recommended friend to the stranger; the stranger sends a request for establishing a social relationship to the target account, and information such as self-introduction of the stranger may be added to the request; and the target account checks the stranger's request information after receiving the request for establishing a social relationship, and then decides whether to approve the stranger's request for establishing a social relationship.

### SUMMARY

The present disclosure provides a method and apparatus for establishing a social relationship, a terminal, a server, and a system. The technical solutions of the present disclosure are as follows:

According to a first aspect of the embodiments of the present disclosure, there is provided a method for establishing a social relationship, including: acquiring an interaction verification condition set for the first account by the target account and a social interaction permission corresponding to the interaction verification condition in response to a request from a first account for establishing a social relationship with a target account; acquiring a social interaction state of the first account with the target account within the social interaction permission; and in response to determining that the social interaction state satisfies the interaction verification condition, establishing a social relationship between the target account and the first account.

In some embodiments, acquiring an interaction verification condition set for the first account by the target account and a social interaction permission corresponding to the interaction verification condition in response to a request from a first account for establishing a social relationship with a target account includes: acquiring an interaction verification task list in response to the request for establishing the social relationship, and the interaction verification task list includes at least one interaction verification task, and each interaction verification task has a corresponding task completion parameter; and obtaining the interaction verification condition according to the interaction verification task list, and the interaction verification condition at least includes the task completion parameter of the interaction verification task selected from the interaction verification task list.

In some embodiments, the acquiring the interaction verification task list includes: acquiring a user portrait of the first account, and he user portrait includes at least one of user occupation, user age, user gender, user historical social behavior data, and service life of the first account; and acquiring, according to the user portrait, the interaction verification task list matching the category to which the user portrait belongs.

In some embodiments, the method further includes: for any interaction verification task list shared by all accounts, acquiring an interaction verification result of each of the interaction verification tasks in each interaction verification condition set by each of the accounts based on the interaction verification task list; acquiring a pass rate of each of the interaction verification tasks in the interaction verification task list according to the interaction verification result; and updating the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

In some embodiments, the method further includes: determining an order of each of the interaction verification tasks included in the updated interaction verification task list according to the pass rate of each of the interaction verification tasks included in the updated interaction verification task list.

In some embodiments, the acquiring the interaction verification condition set for the first account by the target account and the social interaction permission corresponding to the interaction verification condition includes: acquiring a user portrait of the first account in response to the target account triggering a verification task default instruction for the first account; and acquiring, according to the user portrait, a default interaction verification condition matching the category to which the user portrait belongs, and the social interaction permission corresponding to the default interaction verification condition.

In some embodiments, the method further includes: acquiring interaction task execution information of the first account according to the social interaction state and the interaction verification condition in response to determing that the social interaction state does not satisfy the interaction verification condition during an interaction period of the interaction verification condition; and sending a task reminder to the first account according to the interaction task execution information; where the interaction task execution information includes at least one of a completion degree of the interaction task of the interaction verification condition, executed interaction verification tasks, unexecuted interaction verification tasks, a completion degree of each of the executed interaction verification tasks, and a ranking of the interaction between the first account and the target account.

In some embodiments, by sending a social interaction verification request to a server, the server is triggered to acquire and return the interaction verification condition set for the first account by the target account, and the social interaction permission corresponding to the interaction verification condition, and/or, by sending a social interaction state request to the server, the server is triggered to acquire and return the social interaction state of the first account with the target account within the social interaction permission.

According to a second aspect of the embodiments of the present disclosure, there is provided a method for establishing a social relationship, including: acquiring and returning an interaction verification condition set for a first account by a target account, and a social interaction permission corresponding to the interaction verification condition in response to a received social interaction verification request, to establish a social relationship between the target account and the first account; and/or, acquiring and returning a social interaction state of the first account with the target account within the social interaction permission in response to a received social interaction state request, to establish a social relationship between the target account and the first account.

In some embodiments, the acquiring and returning the interaction verification condition set for the first account by the target account and the social interaction permission corresponding to the interaction verification condition in response to the received social interaction verification request includes: acquiring an interaction verification task list and returning it to the target account in response to the social interaction verification request, and the interaction verification task list includes at least one interaction verification task, and each interaction verification task has a corresponding task completion parameter; and obtaining the interaction verification condition by acquiring the interaction verification task selected by the target account from the interaction verification task list, and the interaction verification condition at least includes the task completion parameter of the interaction verification task selected from the interaction verification task list.

In some embodiments, the acquiring the interaction verification task list and returning it to the target account in response to the social interaction verification request includes: acquiring a user portrait of the first account, and the user portrait includes at least one of user occupation, user age, user gender, user historical social behavior data, and service life of the first account; and acquiring, according to the user portrait, the interaction verification task list matching the category to which the user portrait belongs and returning it to the target account.

In some embodiments, the method further includes: for any interaction verification task list shared by all accounts, acquiring an interaction verification result of each of the interaction verification tasks in each interaction verification condition set by each account based on the interaction verification task list; acquiring a pass rate of each of the interaction verification tasks in the interaction verification task list according to the interaction verification result; and updating the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

In some embodiments, the method further includes: determining an order of each of the interaction verification tasks included in the updated interaction verification task list according to the pass rate of each of the interaction verification tasks included in the updated interaction verification task list.

In some embodiments, the acquiring and returning the interaction verification condition set for the first account by the target account and the social interaction permission corresponding to the interaction verification condition includes: acquiring a user portrait of the first account in response to receiving a verification task default instruction for the first account triggered from the target account; and acquiring and returning, according to the user portrait, a default interaction verification condition matching the category to which the user portrait belongs, and the social interaction permission corresponding to the default interaction verification condition.

In some embodiments, the method further includes: acquiring interaction task execution information of the first account according to the social interaction state and the interaction verification condition in response to determining that the social interaction state does not satisfy the interaction verification condition during an interaction period of the interaction verification condition; and sending a task reminder to at least one of the first account and the target account according to the interaction task execution information; where the interaction task execution information includes at least one of a completion degree of the interaction task of the interaction verification condition, executed interaction verification tasks, unexecuted interaction verification tasks, a completion degree of each of the executed interaction verification tasks, and a ranking of the interaction between the first account and the target account.

According to a third aspect of the embodiments of the present disclosure, there is provided an apparatus for establishing a social relationship, including: an interaction verification condition acquisition module, configured to acquire an interaction verification condition set for a first account by a target account and a social interaction permission corresponding to the interaction verification condition in response to a request for establishing a social relationship with the target account from the first account; a social interaction state acquisition module, configured to acquire a social interaction state of the first account with the target account within the social interaction permission; and a social relationship establishment module, configured to establish a social relationship between the target account and the first account in response to determining that the social interaction state satisfies the interaction verification condition.

In some embodiments, the interaction verification condition acquisition module includes: an interaction verification task list acquisition sub-module, configured to acquire an interaction verification task list in response to the request for establishing the social relationship; and the interaction verification task list includes at least one interaction verification task, and each interaction verification task has a corresponding task completion parameter; and an interaction verification condition acquisition sub-module, configured to select at least one interaction verification task from the interaction verification task list to obtain the interaction verification condition, and the interaction verification condition at least includes the task completion parameter of the interaction verification task selected from the interaction verification task list.

In some embodiments, the interaction verification task list acquisition submodule is further configured to: acquire a user portrait of the first account, the user portrait includes at least one of user occupation, user age, user gender, user historical social behavior data, and service life of the first account; and acquire, according to the user portrait, the interaction verification task list matching the category to which the user portrait belongs.

In some embodiments, the apparatus further includes: an interaction verification result acquisition module, configured to: for any interaction verification task list shared by all accounts, acquire an interaction verification result of each of the interaction verification tasks in each interaction verification condition set by each of the accounts based on the interaction verification task list; a pass rate acquisition module, configured to acquire a pass rate of each of the interaction verification tasks in the interaction verification task list according to the interaction verification result; and an interaction verification task updating module, configured to update the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

In some embodiments, the apparatus further includes: an interaction verification task sorting module, configured to determine an order of each of the interaction verification tasks included in the updated interaction verification task list according to the pass rate of each of the interaction verification tasks included in the updated interaction verification task list.

In some embodiments, the interaction verification condition acquisition module is specifically configured to: acquire a user portrait of the first account in response to the target account triggering a verification task default instruction for the first account; and acquire, according to the user portrait, a default interaction verification condition matching the category to which the user portrait belongs, and the social interaction permission corresponding to the default interaction verification condition.

In some embodiments, the apparatus further includes: an interaction task execution information acquisition module, configured to acquire interaction task execution information of the first account according to the social interaction state and the interaction verification condition in response to determining that the social interaction state does not satisfy the interaction verification condition during an interaction period of the interaction verification condition; and a task reminder module, configured to send a task reminder to the first account according to the interaction task execution information; where the interaction task execution information includes at least one of a completion degree of the interaction task of the interaction verification condition, executed interaction verification tasks, unexecuted interaction verification tasks, a completion degree of each of the executed interaction verification tasks, and a ranking of the interaction between the first account and the target account.

In some embodiments, the interaction verification condition acquisition module is further configured to: by sending a social interaction verification request to the server, triggering the server to acquire and return the interaction verification condition set by the target account for the first account, and the social interaction permission corresponding to the interaction verification condition, and/or, the social interaction state acquisition module is further configured to: by sending a social interaction state request to the server, triggering the server to acquire and return the social interaction state of the first account with the target account within the social interaction permission.

According to a fourth aspect of the embodiments of the present disclosure, there is provided social relationship establishment apparatus, including: an interaction verification condition acquisition module, configured to acquire and return an interaction verification condition set for a first account by a target account and a social interaction permission corresponding to the interaction verification condition, in response to a received social interaction verification request, to establish a social relationship between the target account and the first account; and/or, a social interaction state acquisition module, configured to acquire and return a social interaction state of the first account with the target account within the social interaction permission in response to a received social interaction state request, to establish a social relationship between the target account and the first account.

In some embodiments, the interaction verification condition acquisition module includes: an interaction verification task list returning submodule, configured to acquire an interaction verification task list and return it to the target account in response to the social interaction verification request; and the interaction verification task list includinges at least one interaction verification task, and each interaction verification task has a corresponding task completion parameter; and an interaction verification condition acquisition sub-module, configured to obtain the interaction verification condition by acquiring the interaction verification task selected by the target account from the interaction verification task list, and the interaction verification condition at least includes the task completion parameter of the interaction verification task selected from the interaction verification task list.

In some embodiments, the interaction verification task list returning submodule is further configured to: acquire a user portrait of the first account, the user portrait includes at least one of user occupation, user age, user gender, user historical social behavior data, and service life of the first account; and acquire, according to the user portrait, the interaction verification task list matching the category to which the user portrait belongs and returing it to the target account.

In some embodiments, the apparatus further includes: an interaction verification result acquisition module, configured to acquire an interaction verification result of each of the interaction verification tasks in each interaction verification condition set by each account based on the interaction verification task list, for any interaction verification task list shared by all accounts; a pass rate acquisition module, configured to acquire a pass rate of each of the interaction verification tasks in the interaction verification task list according to the interaction verification result; and an interaction verification task updating module, configured to update the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

In some embodiments, the apparatus further includes: an interaction verification task sorting module, configured to determine an order of each of the interaction verification tasks included in the updated interaction verification task list according to the pass rate of each of the interaction verification tasks included in the updated interaction verification task list.

In some embodiments, the interaction verification condition acquisition module is further configured to: acquire a user portrait of the first account in response to receiving a verification task default instruction for the first account triggered by the target account; and acquire and return, according to the user portrait, a default interaction verification condition matching the category to which the user portrait belongs, and the social interaction permission corresponding to the default interaction verification condition.

In some embodiments, the apparatus further includes: an interaction task execution information acquisition module, configured to acquire interaction task execution information of the first account according to the social interaction state and the interaction verification condition in response to determining that the social interaction state does not satisfy the interaction verification condition during an interaction period of the interaction verification condition; and a task reminder module, configured to send a task reminder to at least one of the first account and the target account according to the interaction task execution information; where the interaction task execution information includes at least one of a completion degree of the interaction task of the interaction verification condition, executed interaction verification tasks, unexecuted interaction verification tasks, a completion degree of each of the executed interaction verification tasks, and an ranking of the interaction between the first account and the target account.

According to a fifth aspect of the embodiments of the present disclosure, there is provided a terminal, including: a processor; and a memory, configured to store instructions executable by the processor. The processor is configured to execute the instructions to implement the method for establishing the social relationship in the first aspect as described above.

According to a sixth aspect of the embodiments of the present disclosure, there is provided a non-transitory computer-readable storage medium, when instructions in the storage medium are executed by a processor of a terminal, the terminal is enabled to perform the operations in the method for establishing the social relationship in the first aspect as described above.

According to a seventh aspect of the embodiments of the present disclosure, there is provided a server, including: a processor; and a memory, configured to store instructions executable by the processor. The processor is configured to execute the instructions to implement the method for establishing the social relationship in the second aspect as described above.

According to an eighth aspect of the embodiments of the present disclosure, there is provided a non-transitory computer-readable storage medium, when instructions in the storage medium are executed by a processor of a terminal, the terminal is enabled to perform the operations in the method for establishing the social relationship in the second aspect as described above.

According to a ninth aspect of the embodiments of the present disclosure, there is provided a system for establishing a social relationship, including: the above terminal and the above server.

According to a tenth aspect of the embodiments of the present disclosure, there is provided a computer program product, when instructions in the storage medium are executed by a processor of a terminal, the terminal is enabled to perform the method for establishing the social relationship in the first aspect as described above.

According to an eleventh aspect of the embodiments of the present disclosure, there is provided a computer program product, when instructions in the storage medium are executed by a processor of a server, the server is enabled to perform the method for establishing the social relationship in the second aspect as described above.

According to a twelfth aspect of the embodiments of the present disclosure, there is provided a non-transitory computer-readable storage medium, when instructions in the storage medium are executed by a processor of a terminal, the terminal is enabled to perform the operations in the method for establishing the social relationship in the first aspect as described above.

In the embodiments of the present application, in response to the request from the first account for establishing the social relationship with the target account, the interaction verification condition set for the first account by the target account and the social interaction permission corresponding to the interaction verification condition are acquired; the social interaction state of the first account with the target account within the social interaction permission is acquired; when the social interaction state satisfies the interaction verification condition, the social relationship between the target account and the first account is established. It is realized that in response to the user accepting the request of other users to establish the social relationship, it may be determined whether the social relationship is actually established according to whether the social interaction state therebetween satisfies the corresponding interaction verification condition.

### BRIEF DESCRIPTION OF THE DRAWINGS

FIG. 1 is flowchart I of a method for establishing a social relationship according to an exemplary embodiment.
FIG. 2 is flowchart II of a method for establishing a social relationship according to an exemplary embodiment.
FIG. 3 is a schematic diagram showing an interaction flow of a method for establishing a social relationship according to an exemplary embodiment.
FIG. 4 is flowchart III showing a method for establishing a social relationship according to an exemplary embodiment.
FIG. 5 is flowchart IV showing a method for establishing a social relationship according to an exemplary embodiment.
FIG. 6 is block diagram I showing an apparatus for establishing a social relationship according to an exemplary embodiment.
FIG. 7 is block diagram II showing an apparatus for establishing a social relationship according to an exemplary embodiment.
FIG. 8 is block diagram III showing an apparatus for establishing a social relationship according to an exemplary embodiment.
FIG. 9 is block diagram IV showing an apparatus for establishing a social relationship according to an exemplary embodiment.
FIG. 10 is a block diagram showing an apparatus according to an exemplary embodiment.
FIG. 11 is a block diagram showing another apparatus according to an exemplary embodiment.

### DETAILED DESCRIPTION

In order to make those ordinary skilled in the art better understand the technical solutions of the present disclosure, the technical solutions in the embodiments of the present disclosure will be clearly and completely described below with reference to the accompanying drawings.

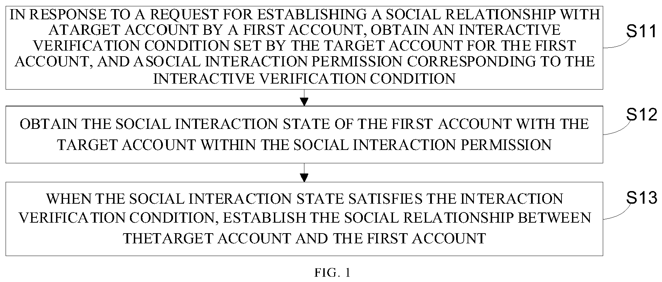

FIG. 1 is flowchart I of a method for establishing a social relationship according to an exemplary embodiment, and the method may be applied to a terminal. As shown in FIG. 1, the method may include the following steps.

In step S11, in response to a request from a first account for establishing a social relationship with a target account, acquiring an interaction verification condition set for the first account by the target account, and a social interaction permission corresponding to the interaction verification condition.

In the embodiment of the present disclosure, in order to improve the quality of the social relationship established and help a user screen out social relationships with strangers with low loyalty, an interaction verification process is added before establishing the social relationship, and the stranger who meets the interaction verification condition may be considered as a high-quality friend of the user, thus the social relationship between the user and the corresponding stranger may be established, which helps to improve the closeness and quality of the user's social relationship.

Therefore, in the embodiment of the present disclosure, in response to the request of the first account for establishing the social relationship with the target account, the interaction verification condition set for the first account by the target account and the social interaction permission corresponding to the interaction verification condition are acquired. The first account is an unfamiliar account relative to the target account, that is, not an account in a friend list of the target account. The first account may trigger the request for establishing the social relationship with the target account in any available manner, which is not limited in the embodiment of the present disclosure.

Moreover, the interaction verification condition may be customized and set by the target account according to requirements. Specifically, the same target account may set different interaction verification conditions for different first accounts respectively, or the same target account may set the same interaction verification condition for different first accounts. Moreover, the target account may set the interaction verification condition for a currently received request for establishing a social relationship each time it receives the request for establishing a social relationship. Alternatively, the target account may also preset the interaction verification conditions for different types of accounts, such that a corresponding interaction verification condition may be acquired according to the account type of the first account corresponding to the currently received request for establishing a social relationship, which is not limited in the embodiment of the present disclosure.

In addition, in practical applications, an account that has established the social relationship with the target account may have all the permissions of the friend function, but an account that has not established the social relationship with the target account generally does not have the permission to interact with the target account. On the contrary, in the embodiment of the present disclosure, in order to perform interaction verification on the first account before establishing the social relationship, partial permissions may be assigned to the first account being in the interaction verification period, and other permissions may be restricted, so that the stranger may be encouraged to establish the social relationship with the target account by reaching the interaction verification condition when acquiring partial permissions.

Specifically, in order to facilitate that the social interaction state of the first account can satisfy the interaction verification condition, the social interaction permission corresponding to the interaction verification condition may be acquired. In some embodiments, a matching relationship between different interaction verification conditions and social interaction permissions may also be preset according to requirements, which is not limited in the embodiment of the present disclosure.

For example, it is assumed that the interaction verification condition includes: chatting with the target account for at least xl minutes every day, and sending at least x2 pictures to the target account every day. The specific values of x1 and x2 may be set according to specific application scenarios. Then a corresponding social interaction permission may be set to include: a permission to conduct a conversation with the target account, and the conversation may include a message conversation, a voice conversation, a video conversation, and the like. Then, at this time, the first account does not have the permission to comment on the dynamics of the target account, pull the target account into a group, and the like.

In step S12, a social interaction state of the first account with the target account within the social interaction permission is acquired.

After acquiring the social interaction permission corresponding to the interaction verification condition, the social interaction state of the first account with the target account within the social interaction permission may be acquired.

For example, it is assumed that the interaction verification condition includes chatting with the target account for at least x1 minutes every day and sending at least x2 pictures to the target account every day as described above. The specific values of x1 and x2 may be set according to specific application scenarios. Also, the acquired social interaction permission includes the above permission to conduct the conversation with the target account, then, at this time, the conversation dynamics between the first account and the target account may be counted separately, including the duration of the daily chat between the first account and the target account, and the number of pictures sent between the first account and the target account each day.

Moreover, since the social interaction state is a social interaction state between the first account and the target account, in the embodiment of the present disclosure, the social interaction state of the first account with the target account within the social interaction permission may be counted at a terminal where the target account is located, counter by the terminal of the first account, or the the social interaction state of the first account with the target account within the social interaction permission may be counted by a server, etc. In addition, the counted social interaction state may also be circulated among the terminal of the first account, the terminal where the target account is located, and the server, which is not limited in the embodiment of the present disclosure.

In the embodiment of the present disclosure, since the social interaction state may occur from time to time, if the current social interaction state is acquired in response to each new social interaction state being generated, the latest social interaction state may be acquired in time. However, the acquiring the social interaction state is easy to be too frequent, and it is necessary to detect whether a new social interaction state is generated in real time. Thus, in order to avoid frequently acquiring the social interaction state, it is also possible to periodically acquire the social interaction state of the first account with the target account within the social interaction permission, and the specific period for acquiring the social interaction state may be customized according to requirements, which is not limited in the embodiment of the present disclosure. For example, the social interaction state of the first account performing interaction verification with the target account within the social interaction permission may be acquired once a day, and the like.

In step S13, in response to determining that the social interaction state satisfies the interaction verification condition, the social relationship between the target account and the first account is established.

After acquiring the social interaction state of the first account with the target account within the social interaction permission, it may be further detected whether the currently acquired social interaction state between the first account and the target account satisfies the corresponding interaction verification condition. If the social interaction state satisfies the interaction verification condition, the social relationship between the target account and the first account may be established.

However, if the acquired social interaction state does not satisfy the corresponding interaction verification condition within the interaction period corresponding to the interaction verification condition, the social relationship between the target account and the first account may not be established, and at the same time, the social interaction permission corresponding to the corresponding interaction verification condition assigned to the first account may be cancelled after the interaction period ends.

In the embodiment of the present disclosure, in response to the request of the first account for establishing the social relationship with the target account, the interaction verification condition set for the first account by the target account and the social interaction permission corresponding to the interaction verification condition are acquired; the social interaction state of the first account with the target account within the social interaction permission is acquired; in response to determining that the social interaction state satisfies the interaction verification condition, the social relationship between the target account and the first account is established. It is realized that in response to a userreceiving a request for establishing the social relationship from another user, according to whether the social interaction state between the users satisfies the corresponding interaction verification condition, it may be determined whether to actually establish the social relationship, so as to improve the quality of the established social relationship and effectively avoid the establishment of low-quality social relationships with low loyalty and closeness.

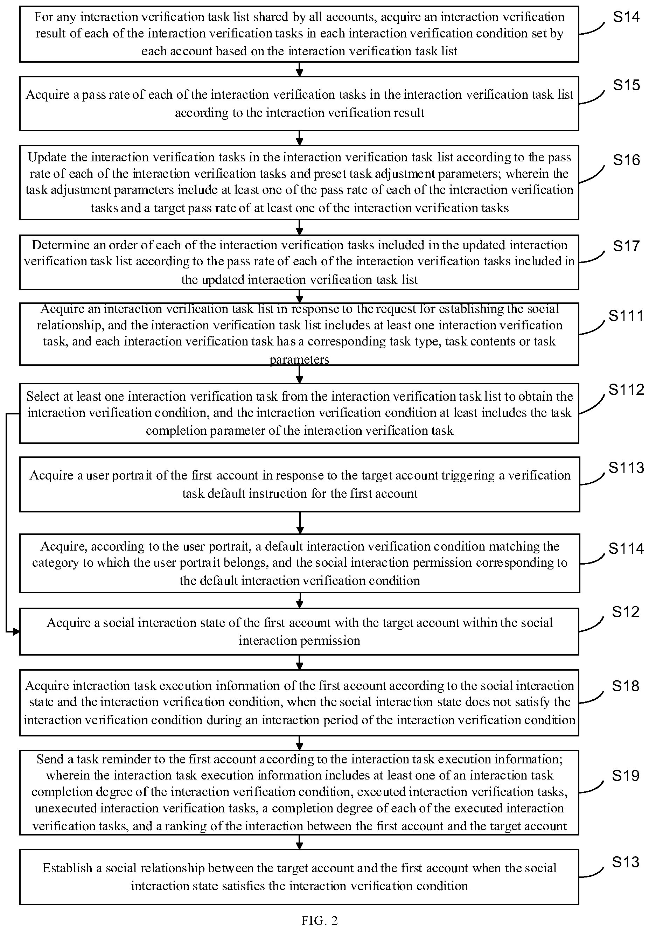

Referring to FIG. 2, in an embodiment of the present disclosure, the step S11 may further include the following steps.

In step Sill, in response to the request for establishing the social relationship, an interaction verification task list including at least one interaction verification task is acquired, and each of the interaction verification tasks has a task completion parameter.

In an embodiment, each of the interaction verification tasks has a corresponding task type, task contents or task parameters.

In step S112, the interaction verification condition is acquired according to the interaction verification task list, and the interaction verification condition at least includes the task completion parameter of the interaction verification task selected from the interaction verification task list.

In an embodiment, at least one interaction verification task is selected from the interaction verification task list in response to an operation by the target account user.

In the embodiment of the present disclosure, in order to facilitate different target accounts to set interaction verification conditions for different first accounts, the interaction verification task list for setting the interaction verification conditions may be provided in advance. The interaction verification task list may include at least one interaction verification task, and each of the interaction verification tasks has a corresponding task completion parameter, and the like. In addition, in order to facilitate the target account to customize the interaction verification condition, the target account may select at least one interaction verification task from the interaction verification task list to set the interaction verification condition according to the requirements, and the interaction verification condition at least includes the task completion parameter of the interaction verification task selected from the interaction verification task list.

The task completion parameter may be customized by the user of the target account according to their needs, and if the interaction verification condition includes multiple interaction verification tasks, the task completion parameter of each interaction verification task may be set to be the same, or the task completion parameter of each interaction verification task may be set to be not exactly the same, which is not limited in the embodiment of the present disclosure. Of course, in the embodiment of the present disclosure, a default value of the task completion parameter may also be preset, and if no custom setting is made for the task completion parameter, the default value of the task completion parameter may be selected by default. For example, the default value may be set to 90%, and the like.

For example, the task completion parameter of a certain interaction verification task in the interaction verification condition may be set to 80%, then if the completion degree of the corresponding interaction verification task detected according to the social interaction state is greater than or equal to 80%, it may be determined that the corresponding interaction verification task is completed.

In addition, in the embodiment of the present disclosure, in order to facilitate the user to customize the task parameters in the case of dissatisfaction with the task parameters of the interaction verification tasks included in the interaction verification task list, the task parameters may be set to include at least one of configurable parameters and fixed parameters, and the specific values of the configurable parameters may be customized by the target account according to requirements.

That is, the target account may select favorite interaction verification task thereof in the interaction verification task list, and if the interaction verification task selected by the target account supports parameter configuration, the target account may configure task parameters for it, that is, setting the specific value of the configurable parameters.

In addition, in practical applications, the target account may receive the request for establishing the social relationship from different accounts, and the request for establishing the social relationship may carry some account information, then the user corresponding to the target account may make a preliminary judgment on the corresponding request for establishing the social relationship based on the account information carried in the request for establishing the social relationship. Further, the user corresponding to the target account may determine not to establish a social relationship with the accounts corresponding to some request for establishing a social relationship based on the account information carried in these requests for establishing the social relationship, or the target account directly agrees to establish a social relationship with the accounts corresponding to some requests for establishing a social relationship, then the corresponding accounts may not be interactionly verified in this case.

Therefore, in the embodiment of the present disclosure, in order to improve the effectiveness of the interaction verification, only the interaction verification condition and social interaction permission for the first account selected by the target account that need to be interactionly verified may be acquired for subsequent interaction verification.

Specifically, if the target account triggers a social interaction verification request for the request for establishing a social relationship, the interaction verification task list may be acquired to set the interaction verification condition for the corresponding request for establishing a social relationship. The target account may trigger the social interaction verification request with respect to the request for establishing a social relationship in any available manner, which is not limited in the embodiment of the present disclosure.

For example, assuming that the target account receives the request for establishing a social relationship from the first account A and the first account B, and the target account currently only triggers the social interaction verification request with respect to the request for establishing a social relationship from the first account B, then the interaction verification task list may be acquired to set the interaction verification condition for the first account B.

After the interaction verification task list is acquired, at least one interaction verification task may be selected from the interaction verification task list to acquire the interaction verification condition for the corresponding first account, for example, the first account B, and the social interaction permission corresponding to the corresponding interaction verification condition.

In an embodiment of the present disclosure, the step Sill may further include: acquiring a user portrait of the first account, the user portrait including at least one of user occupation, user age, user gender, user historical social behavior data, and service life of the first account; and acquiring, according to the user portrait, the interaction verification task list matching the category to which the user portrait belongs.

In practical applications, different types of users may prefer different communication methods. For example, students are more willing to share and prefer a variety of communication methods; office workers have relatively less social interaction dynamics during working hours than non-working hours; and the like. If different types of users use the same interaction verification task list, it is easy to cause a large deviation between the final set interaction verification condition and the daily communication method of the corresponding first account, which affects the pass rate of interaction verification and makes the target account miss high-quality friends.

Therefore, in some embodiments of the present disclosure, in order to improve the matching degree between the interaction verification task list and different user types, and avoid affecting the interaction verification pass rate due to the inappropriate interaction verification task list, the interaction verification task list corresponding to different user portrait categories may be preset. Then, for the first account participating in the interaction verification, the occupation, age, gender, historical social behavior data, and service life of the first account and other information thereof may be referred to, so as to describe its user portrait and acquire its user portrait. By using these data to classify the user portrait of the first account, the category to which the user portrait belongs is acquire, and then the interaction verification task list matching the category to which the user portrait belongs may be acquired, so that the interaction verification condition is set, and the differentiated interaction verification task list based on the user portrait may be provided.

The classification method of the user portrait and the specific content included in the interaction verification task list corresponding to different categories of user portraits may be customized according to requirements, which are not limited in the embodiments of the present disclosure.

For example, in some embodiments of the present disclosure, user portraits of a large number of accounts may be counted in advance, and the user portraits may be classified by any available method to acquire different user portrait categories. Further, based on the social interaction state of a large number of accounts, it is also possible to analyze and count the interaction verification tasks applicable under different user portrait categories, so as to acquire the interaction verification task list.

Referring to FIG. 2, in an embodiment of the present disclosure, the following steps may be further included.

In step S14, for any interaction verification task list shared by all accounts, an interaction verification result of each of the interaction verification tasks in each interaction verification condition set by each account based on the interaction verification task list, is acquired.

In step S15, a pass rate of each of the interaction verification tasks in the interaction verification task list is acquired according to the interaction verification result.

In step S16, the interaction verification tasks in the interaction verification task list are updated according to the pass rate of each of the interaction verification tasks and preset task adjustment parameters; where the task adjustment parameters include at least one of the pass rate of each of the interaction verification tasks and a target pass rate of at least one of the interaction verification tasks.

In the embodiment of the present disclosure, in response to the initially set interaction verification task list, the pass rate of each of the interaction verification tasks included in the interaction verification task list may not be accurately predicted, and thus the difficulty of some interaction verification tasks may be relatively higher, resulting in the lower pass rate of interaction verification, or the difficulty of some interaction verification tasks may be too low, which makes the pass rate of interaction verification too high.

In view of the above situation, in the embodiment of the present disclosure, the interaction verification task list may also be updated. Specifically, the interaction verification tasks in the interaction verification task list may be adjusted, for example, the interaction verification tasks in the interaction verification task list may be deleted, new interaction verification tasks may be added to the interaction verification task list, some task parameters and task contents in some interaction verification tasks may be adjusted, or the like.

Specifically, for any interaction verification task list shared by all accounts, the interaction verification result of each of the interaction verification tasks in each interaction verification condition set by each account based on the interaction verification task list is acquired. The interaction verification task list shared by all accounts includes any interaction verification task list that may be selected by different accounts including the target account to set the interaction verification condition.

In order to acquire the interaction verification result of each of the interaction verification tasks in each interaction verification condition set by each account based on the interaction verification task list, the interaction verification situation of each of the interaction verification tasks in each interaction verification condition set during each interaction verification may be collected or recorded, and the interaction verification result of each of the interaction verification tasks therein may be acquired. The interaction verification result may include whether each interaction verification task in each interaction verification process passes the verification.

Thus, the pass rate of each of the interaction verification tasks may be acquired according to the interaction verification result of each of the interaction verification tasks, and then the interaction verification task list may be dynamically updated according to the pass rate of each of the interaction verification tasks and the preset task adjustment parameters, to ensure that the expected interaction verification pass rate, and/or the expected target pass rate of each interaction verification task may be achieved. The task adjustment parameters may include at least one of the interaction verification pass rate and the target pass rate of at least one of the interaction verification tasks.

Of course, in the embodiment of the present disclosure, in response to setting the expected target pass rate, the target pass rate of only some of the interaction verification tasks may also be set, and then only the interaction verification tasks for which the target pass rate has been set may be adjusted. If an expected interaction verification pass rate is set, any interaction verification task may be adjusted according to requirements. In the embodiment of the present disclosure, the actual pass rate of the interaction verification of each interaction verification condition set by each account based on the interaction verification task list may also be acquired for any interaction verification task list shared by all accounts according to requirements, to facilitate updating the interaction verification task list based on the interaction verification pass rate, and the like.

Moreover, in the embodiment of the present disclosure, in order to ensure that the expected task adjustment parameters are achieved as much as possible, the interaction verification task list may be updated periodically, and a specific update period of the interaction verification task list may be preset according to requirements, which is not limited in the embodiment of the present disclosure.

Referring to FIG. 2, in an embodiment of the present disclosure, the following step may be further included.

In step S17, an order of each of the interaction verification tasks included in the updated interaction verification task list is determined according to the pass rate of each of the interaction verification tasks included in the updated interaction verification task list.

In addition, in order to correctly guide the participating users and promote the user's confidence in completing the task objectives, when setting the interaction verification task list, it is ensured that the interaction verification tasks are arranged in the order of the pass rate of the interaction verification tasks. For example, it may be arranged in increasing order of pass rate, or in descending order of pass rate, and the like. Then, after the interaction verification task list is updated, the order of each of the interaction verification tasks included in the updated interaction verification task list may be further determined according to the pass rate of each of the interaction verification tasks included in the updated interaction verification task list.

The pass rate of each of the interaction verification tasks may be acquired through the above step S15. For the interaction verification task for which the pass rate cannot be acquired through step S15, the pass rate may be predicted and acquired according to a preset pass rate prediction algorithm, or a pass rate prediction model and other available methods. The pass rate prediction algorithm, the pass rate prediction model, and the like may be acquired by training based on the interaction verification task for which the pass rate has been determined.

Referring to FIG. 2, in the embodiment of the present disclosure, the step S11 may further include:
step S113 of acquiring a user portrait of the first account in response to the target account triggering a verification task default instruction for the first account; and
step S114 of acquiring, according to the user portrait, a default interaction verification condition matching the category to which the user portrait belongs, and the social interaction permission corresponding to the default interaction verification condition.

In addition, in the embodiment of the present disclosure, if the target account does not want to set the interaction verification condition for the first account by itself, the process of acquiring the interaction verification task list may also be omitted, and the default interaction verification condition that has been set is directly used as the corresponding interaction verification condition for the first account. That is, if the target account triggers the verification task default instruction for the first account, the default interaction verification condition may be directly acquired as the interaction verification condition for the first account, and the social interaction permission corresponding to the default interaction verification condition may be acquired. Moreover, if the default interaction verification condition is provided by the terminal where the first account is located, the corresponding default interaction verification condition may be directly searched in the terminal where the first account is located. If the default interaction verification condition is provided by the server, the default interaction verification condition may be pulled from the server in this case, which is not limited in the embodiment of the present disclosure.

In addition, in order to meet the needs of different first accounts, a default interaction verification condition may also be set for each of different categories of user portraits respectively. In this case, if the target account triggers the verification task default instruction for the first account, the user portrait of the first account may be acquired, and then the default interaction verification condition matching the category to which the user portrait of the first account belongs may be acquired according to the user portrait of the first account, the default interaction verification condition is used as the corresponding interaction verification condition for the first account, and the social interaction permission corresponding to the default interaction verification condition may be acquired.

Referring to FIG. 2, in the embodiment of the present disclosure, after the step S12, the following steps may be further included.

In step S18, during an interaction period of the interaction verification condition, if the social interaction state does not satisfy the interaction verification condition, interaction task execution information of the first account is acquired according to the social interaction state and the interaction verification condition.

In step S19, a task reminder is sent to the first account according to the interaction task execution information, and the interaction task execution information includes at least one of an interaction task completion degree of the interaction verification condition, executed interaction verification tasks, unexecuted interaction verification tasks, a completion degree of each of the executed interaction verification tasks, and a ranking of the interaction between the first account and the target account.

In order to perform interaction verification, the social interaction state of the first account over a period is generally acquired, and when interaction verification is performed, an interaction period such as one week, one month, or the like, is generally set in the interaction verification condition. If the social interaction state within the interaction period does not satisfy the corresponding interaction verification condition, it may be considered that the corresponding first account has not passed the interaction verification. However, in practical applications, during the interaction period of the interaction verification condition, the user corresponding to the first account and/or the user corresponding to the target account may forget to interact in time, or adjust the interaction in a targeted manner because they do not know the current completion situation of each interaction verification task, making it impossible to pass the interaction verification.

Therefore, in the embodiment of the present disclosure, within the interaction period of the interaction verification condition, if none of the currently acquired social interaction states satisfies the interaction verification condition, the interaction task execution information of the first account may be acquired according to the social interaction state and the interaction verification condition, and then the task reminder may be sent to the first account according to the current interaction task execution information. The interaction task execution information may include, but is not limited to, at least one of the interaction task completion degree of the interaction verification condition, the executed interaction verification tasks, the unexecuted interaction verification tasks, the completion degree of each of the executed interaction verification tasks, and the ranking of the interaction between the first account and the target account. Therefore, according to the completion situation of the interaction verification of the first account, the task reminder is sent to the first account to prompt and encourage it to complete the interaction verification task.

In addition, in the embodiment of the present disclosure, the completion situation of the interaction verification tasks and interaction ranking of each first account may also be counted and published, and the ranking of the interaction between each first account and the target account may be sent to the corresponding first account through the task reminder, to encourage the first account to complete the interaction verification task by using a comparative incentive mechanism. For the target account, the completion situation of the interaction verification task and the interaction ranking of each first account corresponding to the interaction verification may also be acquired, and the like. That is, the current interaction task execution information may be sent to the first account through the task reminder, so as to remind the first account to perform social interaction with the target account. Meanwhile, the task reminder may also be sent to the target account according to the interaction task execution information, so as to remind the target account to actively engage in social interaction with the first account according to requirements.

The completion degree of the interaction tasks may be understood as an overall completion degree of all the interaction verification tasks included in the interaction verification condition. For example, if the interaction verification condition contains three interaction verification tasks a, b and c, and task a has been completed and tasks b, c have not been completed, then the completion degree of the interaction tasks at this time may be 1/3; if the completion degrees of the three interaction verification tasks a, b, and c are 100%, 50%, and 0%, respectively, the completion degree of the interaction tasks may also be (100%+50%+0%)/3=50%, or the like. The specific method for determining the completion degree of the interaction tasks may be customized according to requirements or experience, which is not limited in the embodiment of the present disclosure. The executed interaction verification tasks and the unexecuted interaction verification tasks included in the interaction task execution information may specifically be the task identifiers of the executed interaction verification tasks and the task identifiers of the unexecuted interaction verification tasks, respectively.

The ranking of the interaction between the first account and the target account may be understood as the ranking of the first account among all the accounts currently performing interaction verification with the target account, and the ranking strategy may be customized according to requirements. For example, the ranking may be determined according to a descending order of the interaction task completion degree of each account that performs interaction verification with the target account, and the like.

In the embodiment of the present disclosure, within the interaction period of the interaction verification condition, if the social interaction state does not satisfy the interaction verification condition, the task reminder may be periodically performed, and the period of the task reminder may be customized according to requirements, which is not limited in the embodiment of the present disclosure. Moreover, for interaction task execution information of different dimensions, it is possible to set different periods of task reminders. For example, the task reminder may be set to be sent to the first account once a day for the interaction task execution information. Alternatively, the period of the task reminder may be set to be sent every 8 hours based on the interaction task execution information such as the interaction task completion degree of the interaction verification condition, the executed interaction verification tasks, the unexecuted interaction verification tasks, the completion degree of each of the executed interaction verification tasks, the period of the task reminder may be set to be sent once a day based on the interaction ranking between the first account and the target account, or the like.

In some embodiments of the present disclosure, after the step S13, a interaction score for the interaction between the first account and the target account may also be counted according to the social interaction state and the interaction verification condition; and a level of the social relationship between the first account and the target account is set according to the interaction score.

In practical applications, after setting the interaction verification condition, there may be some first accounts that interact more with the target account within the social interaction permission, so that the social interaction state satisfies the interaction verification condition and far exceeds the minimum condition of the interaction verification condition, that is to say, to a certain, corresponding first accounts are closely related to the target account. Therefore, in order to inform the target account of the close social relationship with it, after establishing the social relationship between the target account and these corresponding first accounts, the interaction score of the interaction between the corresponding first accounts and the target account may be counted according to the social interaction state and the interaction verification condition of these first accounts, such that the social relationship level of the established social relationship between the first account and the target account may be set according to the interaction score. Moreover, the social relationship level may be marked in the social relationship list of the target account and the social relationship list of the first account at the same time, so that the target account and the first account may easily understand the level of each established social relationship. Currently, the target account and the first account may also actively adjust the social relationship level set in their own social relationship list according to requirements, which is not limited in the embodiment of the present disclosure.

The correspondence between the interaction score and the social interaction state and the interaction verification condition, as well as the correspondence between the interaction score and the social relationship level, may be preset according to requirements or experience, which are not limited in the embodiment of the present disclosure. For example, it may be set that: for each interaction verification task in the interaction verification condition, if the social interaction state satisfies the minimum condition in the interaction verification task, the corresponding score is 60; if the social interaction state exceeds the minimum condition, the corresponding score is 100; if the social interaction state is below the minimum condition, the corresponding score is 0, and the like. Then, the relationship between the social interaction state and each interaction verification condition included in the interaction verification condition may be separately counted, so that the interaction score may be acquired. Correspondingly, it may be set that: if the interaction score is within a first threshold range, the social relationship level is level one; if the interaction score is within a second threshold range, the social relationship level is level two, and the like.

Alternatively, in the embodiment of the present disclosure, scoring rules of each interaction verification task may be set while the interaction verification condition is set. Then, in this case, the interaction score for the interaction between the first account and the target account may be directly counted by statistics according to the scoring rules of each interaction verification task and the acquired social interaction state.

For example, the following interaction verification tasks may be set to be included in the interaction verification condition:
Interaction verification task 1, in which it is necessary to reach at least xl minute chat time with the target account every day, and xl is a configurable parameter. The scoring rules for this interaction verification task are: 0 minutes = 0 points, 0~0.5×1 minutes = 30 points, 0.5×1~×1 minutes = 60 points, ×1~1.5×1 = 80 points, duration > 1.5x1 = 100 points. Assuming that xl is set to 30 minutes, if the chat duration of the day is 50 minutes, then 50>1.5^{∗}30, the score of the chat duration of the day is 100 points.

Interaction verification task 2, in which it is necessary to send at least x2 pictures with the target account every day, and x2 is a configurable parameter. The scoring rules for this interaction verification task every day are: 0 pictures = 0 points, 0-3 pictures = 30 points, 4~7 pictures = 60 points, 8~12 pictures = 80 points, and the number of pictures > 12 = 100 points. Therefore, if 2 pictures are sent with the target user on the same day, the score for sending pictures on the same day is 30 points. The specific values of x1 and x2 may be set according to specific application scenarios.

Thus, the score of the same day may be acquired as (100+30)/2=65 points, and if within the interaction period of the interaction verification condition, the average of the scores every day may be acquired as the interaction score for the interaction between the target account and the first account.

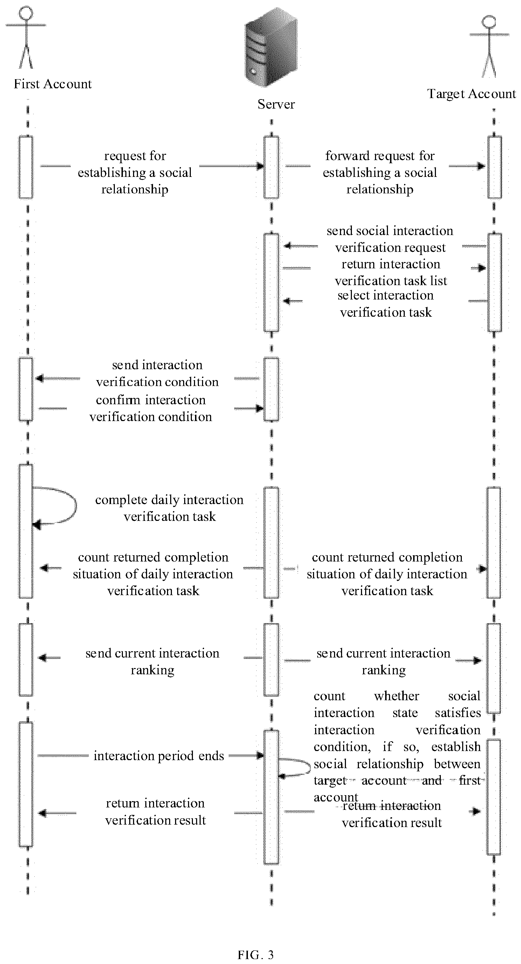

FIG. 3 is a schematic diagram showing an interaction flow of a method for establishing a social relationship. The server may receive the request for establishing a social relationship sent by the first account, and forward it to the corresponding target account requested by the first account. After receiving the request for establishing a social relationship, the target account may trigger the social interaction verification request with respect to the request for establishing a social relationship to the server, and then the interaction verification task list returned by the server may be received. The target account may select the interaction verification tasks used to set the interaction verification condition from the acquired interaction verification task list, set the configurable parameters for the selected interaction verification tasks, and return the selected interaction verification tasks and the set configurable parameters to the server, so as to complete the configuration of the interaction verification condition. Moreover, in order to facilitate targeted interaction of the first account, the server may send the interaction verification condition set by the target account to the first account, and the first account may also actively confirm whether to perform interaction verification based on the received interaction verification condition. If the first account confirms to perform interaction verification, the first account may be assigned the social interaction permission adapted to the interaction verification condition. Then, the first account may interact with the target account by referring to the interaction verification condition to complete the daily interaction verification task. Correspondingly, the server may record the social interaction state of the first account within the social interaction permission. Moreover, in order to motivate the first account and the target account to improve the verification pass rate, the first account and/or the target account may receive the task reminder by counting and returning completion situation of the daily interaction verification tasks and sending the abandoned interaction rankings within the interaction period of the interaction verification condition.

It should be noted that FIG. 3 is only one interaction mode of the method for establishing the social relationship. In the embodiment of the present disclosure, in different application scenarios, the method for establishing the social relationship in the embodiment of the present disclosure may also be achieved through other available interaction modes, which is not limited in the embodiment of the present disclosure.

Moreover, in the embodiment of the present disclosure, it is possible to periodically detect whether the currently acquired social interaction state between the first account and the target account satisfies the interaction verification condition, or to detect whether the social interaction state between the first account and the target account acquired during the interaction period satisfies the interaction verification condition after the interaction period of the interaction verification tasks ends. If the social interaction state between the first account and the target account acquired during the interaction period satisfies the interaction verification condition, the social relationship between the target account and the first account may be established; and if the social interaction state between the first account and the target account acquired during the interaction period does not satisfy the interaction verification condition, no social relationship is established between the target account and the target account, and the social interaction permission assigned to the first account may also be cancelled.

In addition, after the interaction verification is completed, the interaction verification result may also be returned to the target account and/or the first account. For example, if the social relationship between the target account and the first account is established, the target account and/or the first account may be notified respectively through the interaction verification result that the social relationship has been successfully established, and if no social relationship is established between the target account and the first account, the target account and/or the first account may be notified respectively through the interaction verification result that the interaction verification fails, and the like.

In addition, in the embodiment of the present disclosure, in order to acquire the interaction verification condition set for the first account by the target account and the social interaction permission corresponding to the interaction verification condition, a social interaction verification request is sent to the server, so as to trigger the server to acquire and return the interaction verification condition set by the target account for the first account, and the social interaction permission corresponding to the interaction verification condition; and/or, in order to acquire the social interaction state of the first account with the target account within the social interaction permission, a social interaction state request is sent to the server, so as to trigger the server to acquire and return the social interaction state of the first account with the target account within the social interaction permission.

After acquiring the interaction verification condition set for the first account by the target account and the social interaction permission corresponding to the interaction verification condition, the server may return the interaction verification condition and social interaction permission to the terminal where the target account is located, or the interaction verification condition and the social interaction permission may also be sent to the terminal where the first account is located, and the corresponding social interaction permission may be enabled between the first account and the target account.

After triggering the server to acquire the social interaction state of the first account with the target account within the social interaction permission, the social interaction state may be returned to the terminal where the target account is located, or the social interaction state may be sent to the terminal where the first account is located, to judge whether the the social interaction state satisfies the interaction verification condition. Of course, in the embodiment of the present disclosure, it may also be directly determined in the server whether the social interaction state satisfies the interaction verification condition, which is not limited in the embodiment of the present disclosure.

In the embodiment of the present disclosure, through self-learning dynamic adjustment, the interaction verification task list shared by all accounts may be updated through the accumulation of existing data, and the interaction verification tasks in the interaction verification task list may be sorted according to the pass rate, thereby improving the rationality of the interaction verification task list and facilitating the selection of suitable interaction verification tasks, such that the interaction completion pass rate is optimized. Moreover, by providing different interaction verification task lists and default interaction verification conditions for different user portrait categories, the accounts with user portraits belonging to the same category may provide the same interaction verification task list and default interaction verification condition, thereby satisfying the personalized needs of different types of users, improving the matching degree between the interaction verification task list and the first account, and ultimately improving the quality of the social relationship established with the target account. In addition, through the incentive mechanism within the interaction period, users are reminded to complete the interaction verification condition within the interaction period through task reminder means such as ranking and task feedback, so as to improve the interaction verification pass rate in response to ensuring the quality of social relations.

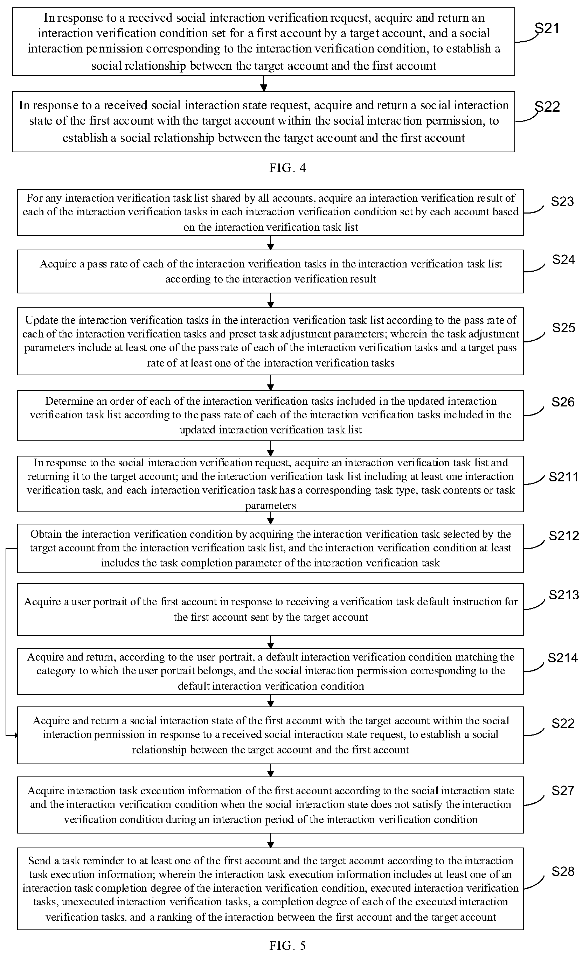

FIG. 4 is a flowchart of a method for establishing a social relationship according to an exemplary embodiment. As shown in FIG. 4, the method may include:
in step S21, in response to a received social interaction verification request, acquiring and returning an interaction verification condition set for a first account by a target account and a social interaction permission corresponding to the interaction verification condition, to establish a social relationship between the target account and the first account; and/or,
in step S22, in response to a received social interaction state request, acquiring and returning a social interaction state of the first account with the target account within the social interaction permission, to establish a social relationship between the target account and the first account.

The specific description of this section may be found in the foregoing description, which will not be repeated here in the present disclosure.

In the embodiment of the present disclosure, in response to the received social interaction verification request, the interaction verification condition set for the first account by the target account and the social interaction permission corresponding to the interaction verification condition are acquired and returned, to establish the social relationship between the target account and the first account; and/or in response to the received social interaction state request, the social interaction state of the first account with the target account within the social interaction permission is acquired and returned, to establish the social relationship between the target account and the first account. Thus, in response to the user accepting the request of other users to establish the social relationship, it may be determined whether the social relationship is actually established according to whether the social interaction state tween the users satisfies the corresponding interaction verification condition, so as to improve the quality of the established social relationship and effectively avoid the establishment of low-quality social relationships with low loyalty and closeness.

Referring to FIG. 5, in the embodiment of the present disclosure, the step S21 may further include steps below.

In step S211, in response to the social interaction verification request, an interaction verification task list is acquired and returned to the target account, and the interaction verification task list includes at least one interaction verification task, and each of the interaction verification tasks has a corresponding task completion parameter.

In an embodiment, each of the interaction verification tasks has a corresponding task type, task contents or task parameters.

In step S212, interaction verification tasks selected by the target account from the interaction verification task list are acquired, so as to acquire the interaction verification condition, and the interaction verification condition at least includes the task completion parameters of the interaction verification tasks selected from the interaction verification task list.

The specific description of this section may be found in the foregoing description, which will not be repeated here in the present disclosure.

In the embodiment of the present disclosure, the step S211 may further include: acquiring a user portrait of the first account, where the user portrait includes at least one of user occupation, user age, user gender, user historical social behavior data, and service life of the first account; and acquiring, according to the user portrait, the interaction verification task list matching the category to which the user portrait belongs, and returing the interaction verification task list to the target account.

The specific description of this section may be found in the foregoing description, which will not be repeated here in the present disclosure.

Referring to FIG. 5, in the embodiment of the present disclosure, the following steps may be further included:
in step S23, for any interaction verification task list shared by all accounts, acquiring an interaction verification result of each of the interaction verification tasks in each interaction verification condition set by each account based on the interaction verification task list;
in step S24, acquiring a pass rate of each of the interaction verification tasks in the interaction verification task list according to the interaction verification result; and
in step S25, updating the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

The specific description of this section may be found in the foregoing description, which will not be repeated here in the present disclosure.

Referring to FIG. 5, in the embodiment of the present disclosure, the method may further include:
in step S26, determining an order of each of the interaction verification tasks included in the updated interaction verification task list according to the pass rate of each of the interaction verification tasks included in the updated interaction verification task list.

The specific description of this section may be found in the foregoing description, which will not be repeated here in the present disclosure.

Referring to FIG. 5, in the embodiment of the present disclosure, the step S21 may further include:
in step S213, in response to receiving a verification task default instruction for the first account sent by the target account, acquiring a user portrait of the first account; and
in step S214, acquiring and returning, according to the user portrait, a default interaction verification condition matching the category to which the user portrait belongs, and the social interaction permission corresponding to the default interaction verification condition.

The specific description of this section may be found in the foregoing description, which will not be repeated here in the present disclosure.

Referring to FIG. 5, in the embodiment of the present disclosure, after the step S22, the method may further include:
in step S27, during an interaction period of the interaction verification condition, if the social interaction state does not satisfy the interaction verification condition, acquiring interaction task execution information of the first account according to the social interaction state and the interaction verification condition; and
in step S28, sending a task reminder to at least one of the first account and the target account according to the interaction task execution information; where the interaction task execution information includes at least one of a completion degree of the interaction task of the interaction verification condition, executed interaction verification tasks, unexecuted interaction verification tasks, a score of each of the executed interaction verification tasks, and a ranking of the interaction between the first account and the target account.

The specific description of this section may be found in the foregoing description, which will not be repeated here in the present disclosure.

It should be noted that, in the embodiment of the present disclosure, the specific content and format of the task reminder sent to the first account and the target account may be different, and the specific settings may be customized according to requirements, which are not limited in the embodiment of the present disclosure.

For example, the task reminder sent to the target account may include a ranking list of the interaction between the target account and each account currently applying for establishing the social relationship therewith, while the task reminder sent to the first account may only include the ranking of the interaction between the first account and the target account, excluding ranking of the interaction between other accounts and the target account; and the like.

In the embodiment of the present disclosure, the following step may be further included: counting an interaction score for the interaction between the first account and the target account according to the social interaction state and the interaction verification condition; and setting a level of the social relationship between the first account and the target account according to the interaction score.

The specific description of this section may be found in the foregoing description, which will not be repeated here in the present disclosure.

In the embodiment of the present disclosure, through self-learning dynamic adjustment, the interaction verification task list shared by all accounts may be updated through the accumulation of existing data, and the interaction verification tasks in the interaction verification task list may be sorted according to the pass rate, thereby improving the rationality of the interaction verification task list and facilitating the selection of suitable interaction verification tasks, such that the interaction completion pass rate is optimized. Moreover, by providing different interaction verification task lists and default interaction verification conditions for different user portrait categories, the accounts with user portraits belonging to the same category may provide the same interaction verification task list and default interaction verification condition, thereby satisfying the personalized needs of different types of users, improving the matching degree between the interaction verification task list and the first account, and ultimately improving the quality of the social relationship established with the target account. In addition, through the incentive mechanism within the interaction period, users are reminded to complete the interaction verification condition within the interaction period through task reminder means such as ranking and task feedback, so as to improve the interaction verification pass rate in response to ensuring the quality of social relations.

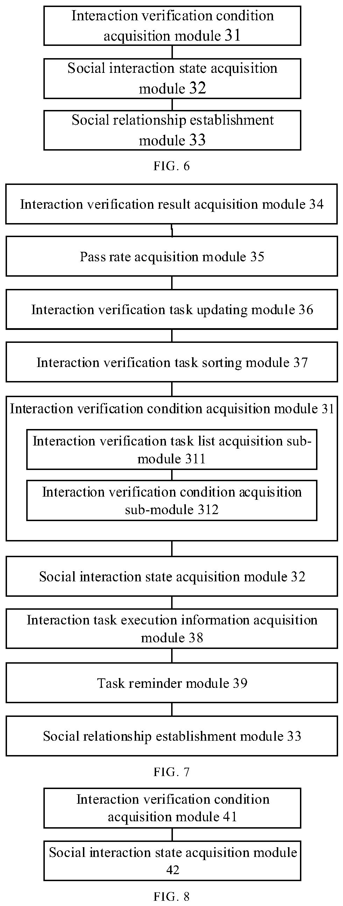

FIG. 6 is a block diagram showing an apparatus for establishing a social relationship according to an exemplary embodiment. Referring to FIG. 6, the apparatus includes an interaction verification condition acquisition module 31, a social interaction state acquisition module 32 and a social relationship establishment module 33.

The interaction verification condition acquisition module 31 is configured to acquire an interaction verification condition set for a first account by a target account and a social interaction permission corresponding to the interaction verification condition in response to a request from the first account for establishing a social relationship with thetarget account.

The social interaction state acquisition module 32 is configured to acquire a social interaction state of the first account with the target account within the social interaction permission.

The social relationship establishment module 33 is configured to establish the social relationship between the target account and the first account in response to determining that the social interaction state satisfies the interaction verification condition.

In an embodiment of the present disclosure, in response to the request from the first account for establishing the social relationship with the target account, the interaction verification condition set for the first account by the target account and the social interaction permission corresponding to the interaction verification condition are acquired; the social interaction state of the first account with the target account within the social interaction permission is acquired; when the social interaction state satisfies the interaction verification condition, the social relationship between the target account and the first account is established. Thus, in response to the user accepting the request of other users to establish the social relationship, it may be determined whether the social relationship is actually established according to whether the social interaction state between the users satisfies the corresponding interaction verification condition, so as to improve the quality of the established social relationship and effectively avoid the establishment of low-quality social relationships with low loyalty and closeness.

Referring to FIG. 7, in the embodiment of the present disclosure, the interaction verification condition acquisition module 31 may further include an interaction verification task list acquisition sub-module 311 and an interaction verification condition acquisition sub-module 312.

The interaction verification task list acquisition sub-module 311 is configured to acquire an interaction verification task list in response to the request for establishing the social relationship. The interaction verification task list includes at least one interaction verification task, and each of the interaction verification tasks has a corresponding task completion parameter.

In an embodiment, each of the interaction verification tasks has a corresponding task type, task contents or task parameters.

The interaction verification condition acquisition sub-module 312 is configured to obtain the interaction verification condition according to the interaction verification task list, and the interaction verification condition at least includes task completion parameters of the interaction verification tasks selected from the interaction verification task list.

In an embodiment, in response to the operation of the target account user, at least one interaction verification task is selected from the interaction verification task list.

In an embodiment of the present disclosure, the interaction verification task list acquisition submodule 311 is specifically configured to: acquire a user portrait of the first account, and the user portrait includes at least one of user occupation, user age, user gender, user historical social behavior data, and service life of the first account; and acquire, according to the user portrait, the interaction verification task list matching the category to which the user portrait belongs.

Referring to FIG. 7, in the embodiment of the present disclosure, the apparatus may further include: an interaction verification result acquisition module 34, configured to acquire an interaction verification result of each of the interaction verification tasks in each interaction verification condition set by each account based on the interaction verification task list, for any interaction verification task list shared by all accounts; a pass rate acquisition module 35, configured to acquire a pass rate of each of the interaction verification tasks in the interaction verification task list according to the interaction verification result; and an interaction verification task updating module 36, configured to update the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

Referring to FIG. 7, in the embodiment of the present disclosure, the apparatus may further include: an interaction verification task sorting module 37, configured to determine an order of each of the interaction verification tasks included in the updated interaction verification task list according to the pass rate of each of the interaction verification tasks included in the updated interaction verification task list.

In the embodiment of the present disclosure, the interaction verification condition acquisition module 31 is specifically configured to: acquire a user portrait of the first account in response to the target account triggering a verification task default instruction for the first account; and acquire, according to the user portrait, a default interaction verification condition matching the category to which the user portrait belongs, and the social interaction permission corresponding to the default interaction verification condition.

Referring to FIG. 7, in the embodiment of the present disclosure, the apparatus may further include: an interaction task execution information acquisition module 38, configured to acquire interaction task execution information of the first account according to the social interaction state and the interaction verification condition in response to determining that the social interaction state does not satisfy the interaction verification condition during an interaction period of the interaction verification condition; and a task reminder module 39, configured to send a task reminder to the first account according to the interaction task execution information; where the interaction task execution information includes at least one of an interaction task completion degree of the interaction verification condition, executed interaction verification tasks, unexecuted interaction verification tasks, a completion degree of each of the executed interaction verification tasks, and a ranking of the interaction between the first account and the target account.

In the embodiment of the present disclosure, the interaction verification condition acquisition module may be specifically configured to: trigger, by sending a social interaction verification request to the server, the server to acquire and return the interaction verification condition set by the target account for the first account, and the social interaction permission corresponding to the interaction verification condition, and/or the social interaction state acquisition module is specifically configured to: trigger, by sending a social interaction state request to the server, the server to acquire and return the social interaction state of the first account with the target account within the social interaction permission.

In the embodiment of the present disclosure, the apparatus may further include: an interaction score statistics module, configured to perform statistics of the interaction score for the interation between the first account and the target account according to the social interaction state and the interaction verification condition; and a social relationship level setting module, configured to set a level of the social relationship between the first account and the target account according to the interaction score.

In the embodiment of the present disclosure, through self-learning dynamic adjustment, the interaction verification task list shared by all accounts may be updated through the accumulation of existing data, and the interaction verification tasks in the interaction verification task list may be sorted according to the pass rate, thereby improving the rationality of the interaction verification task list and facilitating the selection of suitable interaction verification tasks, such that the interaction completion pass rate is optimized. Moreover, by providing different interaction verification task lists and default interaction verification conditions for different user portrait categories, the accounts with user portraits belonging to the same category may provide the same interaction verification task list and default interaction verification condition, thereby satisfying the personalized needs of different types of users, improving the matching degree between the interaction verification task list and the first account, and ultimately improving the quality of the social relationship established with the target account. In addition, through the incentive mechanism within the interaction period, users are reminded to complete the interaction verification condition within the interaction period through task reminder means such as ranking and task feedback, so as to improve the interaction verification pass rate in response to ensuring the quality of social relations.

FIG. 8 is a block diagram showing an apparatus for establishing a social relationship according to an exemplary embodiment. Referring to FIG. 8, the apparatus includes an interaction verification condition acquisition module 41, and/or a social interaction state acquisition module 42.

The interaction verification condition acquisition module 41 is configured to, in response to a received social interaction verification request, acquire and return an interaction verification condition set for a first account by a target account, and a social interaction permission corresponding to the interaction verification condition, to establish a social relationship between the target account and the first account.

The social interaction state acquisition module 42 is configured to, in response to a received social interaction state request, acquire and return a social interaction state of the first account with the target account within the social interaction permission, to establish a social relationship between the target account and the first account.

In the embodiment of the present disclosure, in response to the received social interaction verification request, the interaction verification condition set for the first account by the target account, and the social interaction permission corresponding to the interaction verification condition are acquired and returned, to establish the social relationship between the target account and the first account; and/or in response to the received social interaction state request, the social interaction state of the first account with the target account within the social interaction permission are acquired and returned, to establish the social relationship between the target account and the first account. Thus, in response to the user accepting the request of other users to establish the social relationship, it may be determined whether the social relationship is actually established according to whether the social interaction state between thus users satisfies the corresponding interaction verification condition, so as to improve the quality of the established social relationship and effectively avoid the establishment of low-quality social relationships with low loyalty and closeness.

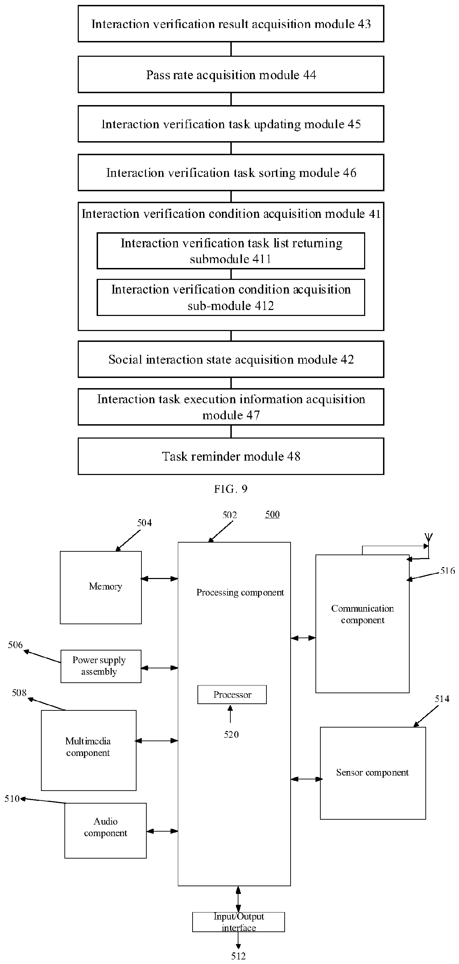

Referring to FIG. 9, in the embodiment of the present disclosure, the interaction verification condition acquisition module 41 may further include an interaction verification task list returning submodule 411 and an interaction verification condition acquisition sub-module 412.

The interaction verification task list returning submodule 411 is configured to, in response to the social interaction verification request, acquire an interaction verification task list and return it to the target account; and the interaction verification task list includes at least one interaction verification task, and each of the interaction verification tasks has a corresponding task completion parameter.

In an embodiment, each of the interaction verification tasks has a corresponding task type, task contents or task parameters.

The interaction verification condition acquisition sub-module 412 is configured to acquire interaction verification task selected by the target account from the interaction verification task list, to obtain the interaction verification condition, and the interaction verification condition at least includes task completion parameters of the interaction verification tasks selected from the interaction verification task list.

In the embodiment of the present disclosure, the interaction verification task list returning submodule 411 is specifically configured to: acquire a user portrait of the first account, the user portrait including at least one of user occupation, user age, user gender, user historical social behavior data, and service life of the first account; and acquire, according to the user portrait, the interaction verification task list matching the category to which the user portrait belongs and returing the interaction verification task list to the target account.

Referring to FIG. 9, in the embodiment of the present disclosure, the apparatus may further include: an interaction verification result acquisition module 43, configured to acquire an interaction verification result of each of the interaction verification tasks in each interaction verification condition set by each account based on the interaction verification task list, for any interaction verification task list shared by all accounts; a pass rate acquisition module 44, configured to acquire a pass rate of each of the interaction verification tasks in the interaction verification task list according to the interaction verification result; and an interaction verification task updating module 45, configured to update the interaction verification tasks in the interaction verification task list according to the pass rate of each of the interaction verification tasks and preset task adjustment parameters; where the task adjustment parameters include at least one of the pass rate of each of the interaction verification tasks and a target pass rate of at least one of the interaction verification tasks.

Referring to FIG. 9, in the embodiment of the present disclosure, the apparatus may further include: an interaction verification task sorting module 46, configured to determine an order of each of the interaction verification tasks included in the updated interaction verification task list according to the pass rate of each of the interaction verification tasks included in the updated interaction verification task list.

In the embodiment of the present disclosure, the interaction verification condition acquisition module 41 is specifically configured to: acquire a user portrait of the first account in response to receiving a verification task default instruction for the first account triggered by the target account; and acquire and return, according to the user portrait, a default interaction verification condition matching the category to which the user portrait belongs, and the social interaction permission corresponding to the default interaction verification condition.

Referring to FIG. 9, in the embodiment of the present disclosure, the apparatus may further include: an interaction task execution information acquisition module 47, configured to acquire interaction task execution information of the first account according to the social interaction state and the interaction verification condition, in response to determining that the social interaction state does not satisfy the interaction verification condition during an interaction period of the interaction verification condition; and a task reminder module 48, configured to send a task reminder to at least one of the first account and/or the target account according to the interaction task execution information; where the interaction task execution information includes at least one of a completion degree of the interaction task of the interaction verification condition, executed interaction verification tasks, unexecuted interaction verification tasks, a completion degree of each of the executed interaction verification tasks, and a ranking of the interaction between the first account and the target account.

In the embodiment of the present disclosure, the apparatus may further include: an interaction score statistics module, configured to perform statistics of the interaction score for the interaction between the first account and the target account according to the social interaction state and the interaction verification condition; and a social relationship level setting module, configured to set a level of the social relationship between the first account and the target account according to the interaction score.

Regarding the apparatus in the above embodiments, the specific manner in which each module performs the operation has been described in detail in the embodiment of the method, and will not be described in detail herein.

In the embodiment of the present disclosure, through self-learning dynamic adjustment, the interaction verification task list shared by all accounts may be updated through the accumulation of existing data, and the interaction verification tasks in the interaction verification task list may be sorted according to the pass rate, thereby improving the rationality of the interaction verification task list and facilitating the selection of suitable interaction verification tasks, such that the interaction completion pass rate is optimized. Moreover, by providing different interaction verification task lists and default interaction verification conditions for different user portrait categories, the accounts with user portraits belonging to the same category may provide the same interaction verification task list and default interaction verification condition, thereby satisfying the personalized needs of different types of users, improving the matching degree between the interaction verification task list and the first account, and ultimately improving the quality of the social relationship established with the target account. In addition, through the incentive mechanism within the interaction period, users are reminded to complete the interaction verification condition within the interaction period through task reminder means such as ranking and task feedback, so as to improve the interaction verification pass rate in response to ensuring the quality of social relations.

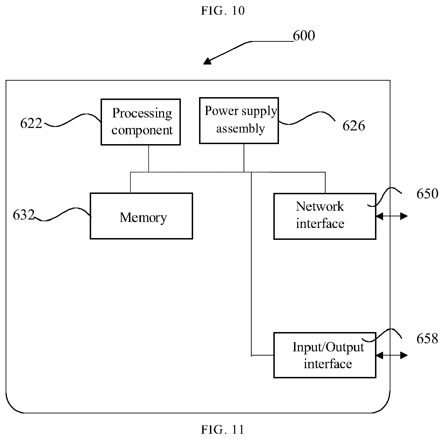

FIG. 10 is a block diagram showing an apparatus 500 for establishing a social relationship according to an exemplary embodiment. For example, the apparatus 500 may be a terminal such as a mobile phone, computer, digital broadcast terminal, message transceiver device, game console, tablet device, medical device, fitness device, personal digital assistant, etc.

Referring to FIG. 10, the apparatus 500 may include one or more of the following components: a processing component 502, a memory 504, a power supply assembly 506, a multimedia component 508, an audio component 510, an input/output (I/O) interface 512, a sensor component 514, and a communication component 516.

The processing component 502 generally controls the overall operation of the apparatus 500, such as operations associated with display, phone calls, data communications, camera operations, and recording operations. The processing component 502 may include one or more processors 520 to execute instructions to perform all or some of the steps of the methods described above. Further, the processing component 502 may include one or more modules to facilitate interaction between the processing component 502 and other components. For example, the processing component 502 may include a multimedia module to facilitate interaction between the multimedia component 508 and the processing component 502.

The memory 504 is configured to store various types of data to support operation at apparatus 500. Examples of such data include instructions, contact data, phonebook data, messages, pictures, videos, and the like, for any application or method operating on the apparatus 500. The memory 504 may be implemented by any type of volatile or non-volatile storage device or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disk.

The power supply assembly 506 provides power to the various components of the apparatus 500. The power supply assembly 506 may include a power management system, one or more power supplies, and other components associated with generating, managing, and distributing power to the apparatus 500.

The multimedia component 508 includes a screen that provides an output interface between the apparatus 500 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component 508 includes a front-facing camera and/or a rear-facing camera. In response to the apparatus 500 being in an operating mode, such as a shooting mode or a video mode, the front camera and/or the rear camera may receive external multimedia data. Each of the front and rear cameras may be a fixed optical lens system or have focal length and optical zoom capability.

The audio component 510 is configured to output and/or input audio signals. For example, the audio component 510 includes a microphone (MIC) that is configured to receive external audio signals in response to the apparatus 500 being in an operating mode, such as a call mode, a recording mode, and a voice recognition mode. The received audio signals may be further stored in the memory 504 or transmitted via the communication component 516. In some embodiments, the audio component 510 also includes a speaker for outputting the audio signals.

The I/O interface 512 provides an interface between the processing component 502 and a peripheral interface module, and the above peripheral interface module may be keyboards, click wheels, buttons, or the like. These buttons may include, but are not limited to: home buttons, volume buttonss, start buttons, and lock buttons.

The sensor assembly 514 includes one or more sensors for providing status assessment of various aspects of the apparatus 500. For example, the sensor assembly 514 may detect the on/off state of the apparatus 500, the relative positioning of components (for example, the components are the displayer and keypad of the apparatus 500), and the sensor assembly 514 may also detect a change in the position of the apparatus 500 or a component of the apparatus 500, the presence or absence of the contact of the user with the apparatus 500, the orientation or acceleration/deceleration of the apparatus 500, and the temperature change of the apparatus 500. The sensor assembly 514 may include a proximity sensor configured to detect the presence of a nearby object in response to the absence of any physical contact. The sensor assembly 514 may also include a light sensor, such as a CMOS or CCD image sensor, for use in imaging applications. In some embodiments, the sensor assembly 514 may also include an acceleration sensor, a gyroscope sensor, a magnetic sensor, a pressure sensor, or a temperature sensor.

The communication component 516 is configured to facilitate wired or wireless communication between the apparatus 500 and other devices. The apparatus 500 may access wireless networks based on communication standards, such as WiFi, carrier networks (for example, 2G, 3G, 4G, or 5G), or a combination thereof. In one exemplary embodiment, the communication component 516 receives broadcast signals or broadcast related information from an external broadcast management system via a broadcast channel. In an exemplary embodiment, the communication component 516 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the apparatus 500 may be implemented by one or more application specific integrated circuits (ASICs), digital signal processors (DSPs), digital signal processing devices (DSPDs), programmable logic devices (PLDs), field Programmable gate arrays (FPGAs), controllers, microcontrollers, microprocessors or other electronic components for performing the above method.

In an exemplary embodiment, a storage medium including instructions, such as a memory 504 including instructions, is also provided, and the instructions are executable by the processor 520 of the apparatus 500 to perform the method described above. In some embodiments, the storage medium may be a non-transitory computer-readable storage medium, for example, the non-transitory computer-readable storage medium may be a ROM, a random access memory (RAM), a CD-ROM, a magnetic tape, a floppy disk, an optical disk data storage device, or the like.

In an exemplary embodiment, there is also provided a terminal, including: a processor; and a memory, configured to store instructions executable by the processor; the processor is configured to execute the instructions to implement the above method for establishing a social relationship.

In an exemplary embodiment, there is also provided a server, including: a processor; and a memory, configured to store instructions executable by the processor; wherein the processor is configured to execute the instructions to implement the above method for establishing a social relationship.

In an exemplary embodiment, there is also provided a system for establishing a social relationship, including: any one of the terminals described in the present disclosure and any one of the servers described in the present disclosure.

FIG. 11 is a block diagram showing an apparatus 600 for establishing a social relationship according to an exemplary embodiment. For example, the apparatus 600 may be provided as a server. Referring to FIG. 11, the apparatus 600 includes a processing component 622, which further includes one or more processors, and a memory resource, represented by a memory 632, configured to store instructions executable by the processing component 622, such as applications. The applications stored in the memory 632 may include one or more modules, each of the modules corresponding to a set of instructions. Further, the processing component 622 is configured to execute instructions to perform the above social relationship establishment method.

The apparatus 600 may further include: a power supply assembly 626 configured to perform power management of the apparatus 600; a wired or wireless network interface 650 configured to connect the apparatus 600 to a network; and an input/output (I/O) interface 658. The apparatus 600 may operate based on an operating system stored in the memory 632, for example, Windows Server^{™}, Mac OS X^{™}, Unix^{™}, Linux^{™}, FreeBSD^{™}, and the like.

## Claims

1. A method for establishing a social relationship, **characterized in that**, comprises:
acquiring an interaction verification condition set for a first account by a target account, and a social interaction permission corresponding to the interaction verification condition, in response to a request for establishing a social relationship with the target account from the first account;
acquiring a social interaction state of the first account with the target account within the social interaction permission; and
establishing the social relationship between the target account and the first account in response to determining that the social interaction state satisfies the interaction verification condition.

2. The method according to claim 1, wherein the acquiring an interaction verification condition set for a first account by a target account in response to a request from the first account for establishing a social relationship with the target account comprises:
acquiring an interaction verification task list in response to the request for establishing the social relationship, wherein the interaction verification task list comprises at least one interaction verification task, and each interaction verification task has a corresponding task completion parameter; and
obtaining the interaction verification condition according to the interaction verification task list, wherein the interaction verification condition at least comprises the task completion parameter of an interaction verification task selected from the interaction verification task list.

3. The method according to claim 2, wherein the acquiring an interaction verification task list comprises:
acquiring a user portrait of the first account, wherein the user portrait comprises at least one of user occupation, user age, user gender, user historical social behavior data, and service life of the first account; and
acquiring, according to the user portrait, the interaction verification task list matching a category to which the user portrait belongs.

4. The method according to claim 2 or 3, further comprising:
for any interaction verification task list shared by all accounts, acquiring an interaction verification result of each of the interaction verification tasks in each interaction verification condition set by each of the accounts based on the interaction verification task list;
acquiring a pass rate of each of the interaction verification tasks in the interaction verification task list according to the interaction verification result; and
updating the interaction verification tasks in the interaction verification task list according to the pass rate of each of the interaction verification tasks and preset task adjustment parameters;
wherein the task adjustment parameters comprise at least one of the pass rate of each of the interaction verification tasks and a target pass rate of at least one of the interaction verification tasks.

5. The method according to claim 4, further comprising:
determining an order of each of the interaction verification tasks included in the updated interaction verification task list according to the pass rate of each of the interaction verification tasks included in the updated interaction verification task list.

6. The method according to claim 1, wherein the acquiring an interaction verification condition set for a first account by a target account and a social interaction permission corresponding to the interaction verification condition comprises:
acquiring a user portrait of the first account in response to the target account triggering a verification task default instruction with respect to the first account; and
acquiring, according to the user portrait, a default interaction verification condition matching a category to which the user portrait belongs, and the social interaction permission corresponding to the default interaction verification condition.

7. The method according to claim 1, further comprising:
in response to determining that the social interaction state does not satisfy the interaction verification condition during an interaction period of the interaction verification condition, acquiring interaction task execution information of the first account according to the social interaction state and the interaction verification condition; and
sending a task reminder to the first account according to the interaction task execution information;
wherein the interaction task execution information comprises at least one of a completion degree of interaction tasks of the interaction verification condition, executed interaction verification tasks, unexecuted interaction verification tasks, a completion degree of each of the executed interaction verification tasks, and a ranking of the interaction between the first account and the target account.

8. The method according to claim 1, wherein
a server is triggered, by sending a social interaction verification request to the server, to acquire and return the interaction verification condition set by the target account for the first account, and the social interaction permission corresponding to the interaction verification condition, and/or,
the server is triggered, by sending a social interaction state request to the server, to acquire and return the social interaction state of the first account with the target account within the social interaction permission.

9. A method for establishing a social relationship, **characterized in that**, comprises:
acquiring and returning an interaction verification condition set for a first account by a target account and a social interaction permission corresponding to the interaction verification condition in response to a received social interaction verification request, to establish a social relationship between the target account and the first account; and/or,
acquiring and returning a social interaction state of the first account with the target account within the social interaction permission in response to a received social interaction state request, to establish a social relationship between the target account and the first account.

10. The method according to claim 9, wherein the acquiring and returning an interaction verification condition set for a first account by a target account and a social interaction permission corresponding to the interaction verification condition in response to a received social interaction verification request comprises:
acquiring an interaction verification task list and returning the interaction verification task list to the target account in response to the social interaction verification request, wherein the interaction verification task list comprises at least one interaction verification task, and each interaction verification task has a corresponding task completion parameter; and
obtaining the interaction verification condition by acquiring the interaction verification task selected by the target account from the interaction verification task list, wherein the interaction verification condition at least comprises the task completion parameter of the interaction verification task selected from the interaction verification task list.

11. The method according to claim 10, wherein the acquiring an interaction verification task list and returning the interaction verification task list to the target account in response to the social interaction verification request comprises:
acquiring a user portrait of the first account, wherein the user portrait comprising at least one of user occupation, user age, user gender, user historical social behavior data, and service life of the first account; and
acquiring, according to the user portrait, the interaction verification task list matching a category to which the user portrait belongs and returning the interaction verification task list to the target account.

12. The method according to claim 10 or 11, further comprising:
for any interaction verification task list shared by all accounts, acquiring an interaction verification result of each of the interaction verification tasks in each interaction verification condition set by each of the accounts based on the interaction verification task list;
acquiring a pass rate of each of the interaction verification tasks in the interaction verification task list according to the interaction verification result; and
updating the interaction verification tasks in the interaction verification task list according to the pass rate of each of the interaction verification tasks and preset task adjustment parameters;
wherein the task adjustment parameters comprise at least one of the pass rate of each of the interaction verification tasks and a target pass rate of at least one of the interaction verification tasks.

13. The method according to claim 12, further comprising:
determining an order of each of the interaction verification tasks included in the updated interaction verification task list according to the pass rate of each of the interaction verification tasks included in the updated interaction verification task list.

14. The method according to claim 9, wherein the acquiring and returning an interaction verification condition set for a first account by a target account and a social interaction permission corresponding to the interaction verification condition comprises:
acquiring a user portrait of the first account in response to receiving a verification task default instruction for the first account triggered by the target account; and
acquiring and returning, according to the user portrait, a default interaction verification condition matching a category to which the user portrait belongs, and the social interaction permission corresponding to the default interaction verification condition.

15. The method according to claim 9, further comprising:
acquiring interaction task execution information of the first account according to the social interaction state and the interaction verification condition in response to determining that the social interaction state does not satisfy the interaction verification condition during an interaction period of the interaction verification condition; and
sending a task reminder to at least one of the first account and the target account according to the interaction task execution information;
wherein the interaction task execution information comprises at least one of a completion degree of interaction tasks of the interaction verification condition, executed interaction verification tasks, unexecuted interaction verification tasks, a completion degree of each of the executed interaction verification tasks, and a ranking of the interaction between the first account and the target account.

16. An apparatus for establishing a social relationship, **characterized in that**, comprises:
an interaction verification condition acquisition module, configured to acquire an interaction verification condition set for a first account by a target account and a social interaction permission corresponding to the interaction verification condition in response to a request for establishing a social relationship with the target account from the first account;
a social interaction state acquisition module, configured to acquire a social interaction state of the first account with the target account within the social interaction permission; and
a social relationship establishment module, configured to establish a social relationship between the target account and the first account in response to determining that the social interaction state satisfies the interaction verification condition.

17. The apparatus according to claim 16, wherein the interaction verification condition acquisition module comprises:
an interaction verification task list acquisition sub-module, configured to acquire an interaction verification task list in response to the request for establishing the social relationship, wherein the interaction verification task list comprises at least one interaction verification task, and each interaction verification task has a corresponding task completion parameter; and
an interaction verification condition acquisition sub-module, configured to obtain the interaction verification condition according to the interaction verification task list, wherein the interaction verification condition at least comprises the task completion parameter of the interaction verification task selected from the interaction verification task list.

18. The apparatus according to claim 17, wherein the interaction verification task list acquisition submodule is further configured to:
acquire a user portrait of the first account, wherein the user portrait comprises at least one of user occupation, user age, user gender, user historical social behavior data, and service life of the first account; and
acquire, according to the user portrait, the interaction verification task list matching a category to which the user portrait belongs.

19. The apparatus according to claim 17 or 18, further comprising:
an interaction verification result acquisition module, configured to: for any interaction verification task list shared by all accounts, acquire an interaction verification result of each of the interaction verification tasks in each interaction verification condition set by each of the accounts based on the interaction verification task list;
a pass rate acquisition module, configured to acquire a pass rate of each of the interaction verification tasks in the interaction verification task list according to the interaction verification result; and
an interaction verification task updating module, configured to update the interaction verification tasks in the interaction verification task list according to the pass rate of each of the interaction verification tasks and preset task adjustment parameters;
wherein the task adjustment parameters comprise at least one of the pass rate of each of the interaction verification tasks and a target pass rate of at least one of the interaction verification tasks.

20. The apparatus according to claim 19, further comprising:
an interaction verification task sorting module, configured to determine an order of each of the interaction verification tasks included in the updated interaction verification task list according to the pass rate of each of the interaction verification tasks included in the updated interaction verification task list.

21. The apparatus according to claim 16, wherein the interaction verification condition acquisition module is further configured to:
acquire a user portrait of the first account in response to the target account triggering a verification task default instruction with respect to the first account; and
acquire, according to the user portrait, a default interaction verification condition matching a category to which the user portrait belongs, and the social interaction permission corresponding to the default interaction verification condition.

22. The apparatus according to claim 16, further comprising:
an interaction task execution information acquisition module, configured to acquire interaction task execution information of the first account according to the social interaction state and the interaction verification condition in response to determining that the social interaction state does not satisfy the interaction verification condition during an interaction period of the interaction verification condition; and
a task reminder module, configured to send a task reminder to the first account according to the interaction task execution information;
wherein the interaction task execution information comprises at least one of a completion degree of the interaction task of the interaction verification condition, executed interaction verification tasks, unexecuted interaction verification tasks, a completion degree of each of the executed interaction verification tasks, and a ranking of the interaction between the first account and the target account.

23. The apparatus according to claim 16, wherein the interaction verification condition acquisition module is further configured to: triggering, by sending a social interaction verification request to a server, the server to acquire and return the interaction verification condition set for the first account by the target account, and the social interaction permission corresponding to the interaction verification condition, and/or,
the social interaction state acquisition module is further configured to: triggering, by sending a social interaction state request to the server, the server to acquire and return the social interaction state of the first account with the target account within the social interaction permission.

24. An apparatus for establishing a social relationship, **characterized in that**, comprises:
an interaction verification condition acquisition module, configured to acquire and return an interaction verification condition set for a first account by a target account and a social interaction permission corresponding to the interaction verification condition in response to a received social interaction verification request, to establish a social relationship between the target account and the first account; and/or,
a social interaction state acquisition module, configured to acquire and return a social interaction state of the first account with the target account within the social interaction permission in response to a received social interaction state request, to establish a social relationship between the target account and the first account.

25. The apparatus according to claim 24, wherein the interaction verification condition acquisition module comprises:
an interaction verification task list returning submodule, configured to acquire an interaction verification task list and return the interaction verification task list to the target account in response to the social interaction verification request, wherein the interaction verification task list comprises at least one interaction verification task, and each interaction verification task has a corresponding task completion parameter; and
an interaction verification condition acquisition sub-module, configured to obtain the interaction verification condition by acquiring the interaction verification task selected by the target account from the interaction verification task list, wherein the interaction verification condition at least comprises the task completion parameter of the interaction verification task selected from the interaction verification task list.

26. The apparatus according to claim 25, wherein the interaction verification task list returning submodule is further configured to:
acquire a user portrait of the first account, wherein the user portrait comprises at least one of user occupation, user age, user gender, user historical social behavior data, and service life of the first account; and
acquire, according to the user portrait, the interaction verification task list matching a category to which the user portrait belongs and returing the interaction verification task list to the target account.

27. The apparatus according to claim 25 or 26, further comprising:
an interaction verification result acquisition module, configured to: for any interaction verification task list shared by all accounts, acquire an interaction verification result of each of the interaction verification tasks in each interaction verification condition set by each of the accounts based on the interaction verification task list;
a pass rate acquisition module, configured to acquire a pass rate of each of the interaction verification tasks in the interaction verification task list according to the interaction verification result; and
an interaction verification task updating module, configured to update the interaction verification tasks in the interaction verification task list according to the pass rate of each of the interaction verification tasks and preset task adjustment parameters;
wherein the task adjustment parameters comprise at least one of the pass rate of each of the interaction verification tasks and a target pass rate of at least one of the interaction verification tasks.

28. The apparatus according to claim 27, further comprising:
an interaction verification task sorting module, configured to determine an order of each of the interaction verification tasks included in the updated interaction verification task list according to the pass rate of each of the interaction verification tasks included in the updated interaction verification task list.

29. The apparatus according to claim 24, wherein the interaction verification condition acquisition module is further configured to:
acquire a user portrait of the first account in response to receiving a verification task default instruction with respect to the first account triggered by the target account; and
acquire and return, according to the user portrait, a default interaction verification condition matching a category to which the user portrait belongs, and the social interaction permission corresponding to the default interaction verification condition.

30. The apparatus according to claim 24, further comprising:
an interaction task execution information acquisition module, configured to acquire interaction task execution information of the first account according to the social interaction state and the interaction verification condition in response to determing that the social interaction state does not satisfy the interaction verification condition during an interaction period of the interaction verification condition; and
a task reminder module, configured to send a task reminder to at least one of the first account and the target account according to the interaction task execution information;
wherein the interaction task execution information comprises at least one of a completion degree of the interaction task of the interaction verification condition, executed interaction verification tasks, unexecuted interaction verification tasks, a completion degree of each of the executed interaction verification tasks, and a ranking of the interaction between the first account and the target account.

31. A terminal, comprising:
a processor; and
a memory, configured to store instructions executable by the processor;
wherein the processor is configured to execute the instructions to implement the following steps:
in response to a request from a first account for establishing a social relationship with a target account, acquiring an interaction verification condition set for the first account by the target account, and a social interaction permission corresponding to the interaction verification condition;
acquiring a social interaction state of the first account with the target account within the social interaction permission; and
in response to determining that the social interaction state satisfies the interaction verification condition, establishing a social relationship between the target account and the first account.

32. A non-transitory computer-readable storage medium, wherein when instructions in the storage medium are executed by a processor of a terminal, the terminal is enabled to perform the following steps:
in response to a request from a first account for establishing a social relationship with a target account, acquiring an interaction verification condition set for the first account by the target account, and a social interaction permission corresponding to the interaction verification condition;
acquiring a social interaction state of the first account with the target account within the social interaction permission; and
in response to determining that the social interaction state satisfies the interaction verification condition, establishing a social relationship between the target account and the first account.

33. A server, comprising:
a processor; and
a memory, configured to store instructions executable by the processor;
wherein the processor is configured to execute the instructions to implement the following steps:
in response to a received social interaction verification request, acquiring and returning an interaction verification condition set for a first account by a target account, and a social interaction permission corresponding to the interaction verification condition, to establish a social relationship between the target account and the first account; and/or,
in response to a received social interaction state request, acquiring and returning a social interaction state of the first account with the target account within the social interaction permission, to establish a social relationship between the target account and the first account.

34. A non-transitory computer-readable storage medium, wherein when instructions in the storage medium are executed by a processor of a server, the server is enabled to perform to the following steps:
in response to a received social interaction verification request, acquiring and returning an interaction verification condition set for a first account by a target account, and a social interaction permission corresponding to the interaction verification condition, to establish a social relationship between the target account and the first account; and/or,
in response to a received social interaction state request, acquiring and returning a social interaction state of the first account with the target account within the social interaction permission, to establish a social relationship between the target account and the first account.

35. A system for establishing a social relationship, comprising the terminal according to claim 31 and the server according to claim 33.
